# EUROPÄISCHE PATENTSCHRIFT

(11) **EP 1 438 889 B1**
(45) Veröffentlichungstag und Bekanntmachung des Hinweises auf die Patenterteilung: **26.10.2005**
(21) Anmeldenummer: 03027521.8
(22) Anmeldetag: 29.11.2003
(51) Int. Cl.: A01F 15/07, A01F 15/08

(54) **Presse, insbesondere Rundballenpresse**
Press, in particular rotobaler
Presse, en particulier presse à balles rondes

(30) Priorität: 07.12.2002 DE 10257252
(43) Veröffentlichungstag der Anmeldung: 21.07.2004
(73) Patentinhaber: DEERE & COMPANY, Moline, Illinois 61265-8098 (US)
(72) Erfinder: Viaud, Jean, 70100 Gray (FR)
(74) Vertreter: Magin, Ludwig Bernhard

(56) Entgegenhaltungen:
- EP-A- 0 865 723
- EP-A- 1 210 861
- US-A- 5 822 967
- US-B1- 6 240 712

## Beschreibung

Die Erfindung betrifft eine Presse, insbesondere Rundballenpresse, mit einem Pressraum, einem Auslass des Pressraums und mit einer Weiterbearbeitungsvorrichtung, die stromabwärts des Auslasses angeordnet ist und einen Fördertisch aufweist, der in wenigstens einer Führung gegenüber dem Auslass bewegbar ist

Die DE 40 21 307 A1 beschreibt eine Großballenpresse mit einer Wickelvorrichtung für quaderförmige Ballen, die als Presslinge in Art einer Schlange mit ihren Stirnseiten aneinander gereiht sind, jedoch auch einzeln umwickelt werden können.

Eine Wickelvorrichtung für Gras- oder Stroh-Pressling, die an ein Fahrzeug anschließbar ist und zur Umwicklung von Presslingen mit rundem oder rechteckigem Querschnitt mit Folie geeignet ist, geht aus der DE 196 54 982 A1 hervor.

Eine mit einer Wickelvorrichtung kombinierte Rundballenpresse ist aus der US 58 82 967 A bekannt, bei der zwei Rollen mit Wickelmaterial um eine vertikale Achse gedreht werden, wobei während eines Wickelvorgangs ein Ballen um eine horizontale Achse drehbar ist. Ein Arm zum Aufnehmen der Wickelvorrichtung erstreckt sich in einer Außerbetriebsstellung über eine bestimmte Länge über die Rundballenpresse hinaus, was beim Manövrieren relativ ungünstig ist. Zudem müssen die Dreharme mit den Rollen bei jedem Be- und Entladevorgang des Ballens in eine seitliche Außerbetriebsstellung gebracht werden.

Die EP 1 210 861 A2 zeigt schließlich eine Rundballenpresse mit einer rückwärtig angebrachten Wickelvorrichtung, die im Außerbetriebszustand demontierbar ist. Während des Betriebs ergibt die Kombination jedoch eine relativ große Baulänge des gesamten Gefährts.

Dokument EP 0 865 723 offenbart eine Ballenpresse mit allen Kennzeichen aus dem Oberbegriff vom Anspruch 1.

Das der Erfindung zu Grunde liegende Problem wird darin gesehen, dass bekannte Rundballenpressen nicht in raumsparender Weise mit einer Wickelvorrichtung ausrüstbar sind.

Dieses Problem wird erfindungsgemäß durch die Lehre des Patentanspruchs 1 gelöst, wobei in den weiteren Patenansprüchen Merkmale aufgeführt sind, welche die Lösung in vorteilhafter Weise weiter entwickeln.

Auf diese Weise kann ein Ballen in bisher bekannter Weise erzeugt und aus der Presse entladen werden und kann zugleich in einer Weiterbearbeitungsvorrichtung gewogen bzw. in einer Wickelvorrichtung mit Wickelmaterial umschlungen werden. Die Weiterbearbeitungsvorrichtung kann insbesondere als Wiegevorrichtung ausgestaltet sein. Es können gegebenenfalls auch weitere Messungen vorgenommen werden, bspw. eine optische Volumenerfassung, eine Feuchtigkeitsmessung oder dergleichen. Die Weiterbearbeitungsvorrichtung kann in einer Ausgestaltung der Erfindung als Wickelgerät ausgebildet sein, das in einer Betriebsstellung hinter dem Ballenpressraum angeordnet ist und das in eine platzsparende Außerbetriebsstellung bringbar ist. Als Presse kann sowohl eine Rundballenpresse festen oder variablen Pressraum als auch eine Quaderballenpresse verwendet werden.

Zu diesem Zweck sind vorzugsweise Führungen für einen Fördertisch vorgesehen, von denen zumindest ein Teil in eine Außerbetriebsstellung an den Außenkanten der Presse bringbar ist. Die Führungen können in vorteilhafter Weise zumindest teilweise an einem Schwenkrahmen vorgesehen sein, der gleichzeitig eine Auflage für den Fördertisch bzw. den Wickeltisch bildet. Durch eine Betätigungsvorrichtung in Form eines hydraulischen Antriebs oder dergleichen kann der Schwenkrahmen in seine Platz sparende Außerbetriebsstellung gebracht werden, bei der die Presse eine deutlich reduzierte Länge aufweist. Die erste und die zweite Führung können auch in einer einzigen Führung zusammengefasst werden.

Der Fördertisch kann gleichzeitig als Ablagevorrichtung sowie als Wickeltisch des Wickelgeräts dienen. Mehrere Betätigungsvorrichtungen, die jeweils gelenkig an einem Rahmen der Presse sowie an weiteren gelenkigen Koppelstangen gelagert sind, dienen zur Verschiebung des Fördertischs zwischen einer Übernahmeposition zur Übernahme eines fertig gepressten Ballens und einer Ablageposition zum Ablegen des Ballens auf dem Boden. Die Betätigungsvorrichtungen können wahlweise nachgiebig sein, bspw. indem sie federnd am Rahmen oder untereinander abgestützt sind. Die Betätigungsvorrichtungen können eine als Gasspeicher oder mechanisch ausgebildete Feder aufweisen. Es kann auch ein Druckmedium wie Öl oder Gas durch Ventile gedrosselt entweichen. Die Wucht eines ankommenden Ballens wird dadurch gedämpft. Eine solche federnde Abstützung dient zur mechanischen Entlastung der starren sowie der bewegten Bauteile und kann deren Lebensdauer im Verschleiß fördernden landwirtschaftlichen Betrieb verlängern.

Eine weitere Verringerung der Abmessungen der Presse kann dadurch erreicht werden, dass die Wickelarme der als Wickelvorrichtung ausgebildeten Weiterbearbeitungsvorrichtung in eine Außerbetriebsstellung bringbar sind. Die Wickelarme können insbesondere zweiteilig ausgebildet sein und um eine vertikal angeordnete Rotationsachse gegeneinander verschwenkt und in Richtung zum Heck der Presse gebracht werden. Im Zusammenhang mit der nach oben geschwenkten Weiterbehandlungsvorrichtung, bspw. deren Schwenkrahmen, kann die Presse in dieser Betriebsstellung sehr kurz bauen.

Die Wickelarme können mittels Stellmotoren in ihre Außerbetriebsstellung gebracht werden. Die Stellmotoren können elektromotorisch, hydraulisch oder pneumatisch betrieben werden.

Vorzugsweise sind die Bewegungen der Weiterbearbeitungsvorrichtung sowie der Wickelvorrichtung miteinander gekoppelt. So kann bspw. vorgesehen sein, dass in einer Außerbetriebsstellung des Fördertischs sowie des Schwenkrahmens zwangsläufig auch die Wickelarme des Wickelgeräts eingeklappt bleiben. Die Stellmotoren des Fördertischs bzw. des Wickeltischs und/oder der Wickelarme werden vorzugsweise in Abhängigkeit wenigstens eines Signals einer weiteren verstellbaren Komponente der Presse angesteuert. Die verschiedenen Betriebsstellungen der Presse können vorzugsweise programmgesteuert werden, wobei die verschiedenen Programme durch einen zentralen Bordrechner eines Zugfahrzeugs ausgewählt werden.

Ein besonderer Vorteil der erfindungsgemäßen Presse ist die Möglichkeit eines nahezu kontinuierlichen Betriebs. Während ein fertig gepresster Ballen in der nachgeordneten Weiterbearbeitungsvorrichtung gewogen, vermessen und/oder mit Folie umwickelt und anschließend auf dem Boden abgelegt wird, kann im Pressraum gleichzeitig ein weiterer Ballen gepresst werden. Lediglich während dessen Übergabe auf den in einer Übernahmeposition unterhalb des Pressraums befindlichen Fördertisch ist der Pressbetrieb kurzzeitig unterbrochen, da hierzu die Pressmittel vom Ballen entfernt werden müssen. Diese Unterbrechung ist jedoch in aller Regel so kurz, dass sie gegebenenfalls von der Fördervorrichtung ausgeglichen werden kann, ohne dass es im oder vor dem Einlass zu einem Gutstau kommt.

Die Presse kann in allen beschriebenen Varianten grundsätzlich in wenigstens zwei verschiedenen Betriebsmodi betrieben werden. Im ersten Modus ist dem Pressraum die Weiterbearbeitungsvorrichtung nachgeordnet und die zweiten Führungen für den Fördertisch sind in ihrer Betriebsstellung. Der aus dem Pressraum entnommene Ballen bleibt zunächst auf der Presse, bevor er auf dem Boden abgelegt wird. Die Baulänge ist gegenüber einer reinen Presse entsprechend erhöht. In einem zweiten Modus wird auf die Weiterbearbeitung verzichtet und der Ballen wird unmittelbar nach dem Pressen auf dem Boden abgelegt. Hierbei befindet sich die Weiterbearbeitungsvorrichtung in einer Außerbetriebsstellung und der Fördertisch wird nicht in die zweiten Führungen geschoben. Die Presse ist in diesem Modus deutlich kompakter, so dass sich dieser zweite Modus insbesondere auch zur Straßenfahrt eignet.

In der Zeichnung sind nachfolgend näher beschriebene Ausführungsbeispiele der Erfindung dargestellt. Es zeigt:
- Fig. 1: eine Presse mit einer nachgeordneten Weiterbearbeitungsvorrichtung in der Form eines Wickelgeräts in schematischer Darstellung und in Seitenansicht,
- Fig. 2: die Presse nach Figur 1 mit in Betriebsstellung befindlicher Weiterbearbeitungsvorrichtung,
- Fig. 3: die Presse nach Figur 1 in einer Stellung zum Entladen eines Ballens,
- Fig. 4: die Presse nach Figur 1 in einer Übernahmestellung eines Fördertischs,
- Fig. 5: die Presse nach Figur 1 in einer Außerbetriebsstellung des Wickelgeräts,
- Fig. 6: die Presse nach Figur 5 in einer Stellung zum Entladen eines Ballens,
- Fig. 7: die Presse nach den Figuren 1 bis 6 in einer schematischen Draufsicht,
- Fig. 8: eine alternative Ausführungsform einer Presse mit einer nachgeordneten Weiterbearbeitungsvorrichtung in schematischer Darstellung und in Seitenansicht,
- Fig. 9: die Presse nach Figur 8 in einer Stellung zum Entladen eines Ballens,
- Fig. 10: die Presse nach Figur 8 in einer Außerbetriebsstellung der Weiterbearbeitungsvorrichtung,
- Fig. 11: die Presse nach Figur 10 in einer Stellung zum Entladen eines Ballens und
- Fig. 12: die Presse nach den Figuren 8 bis 11 in schematischer Draufsicht.

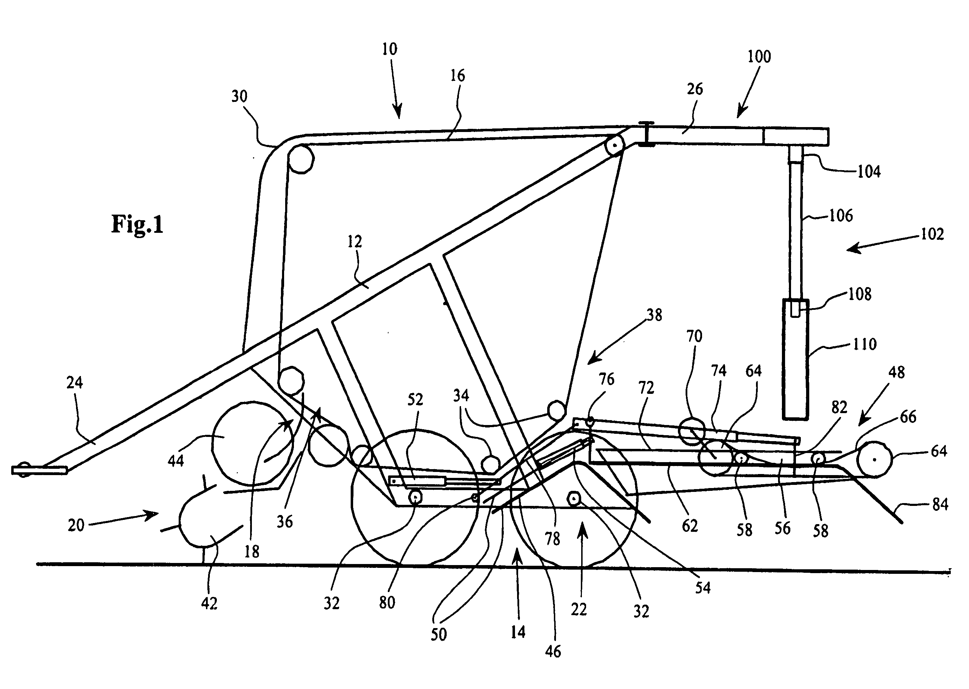

Figur 1 zeigt eine als Rundballenpresse ausgebildete Presse 10 mit einer nachgeordneten als Wickelgerät 100 ausgebildeten Weiterbearbeitungsvorrichtung 120.

Die Presse 10 weist im gezeigten Ausführungsbeispiel einen Rahmen 12, ein Fahrgestell 14, Presselemente 16, einen Pressraum 18, eine Zuführvorrichtung 20 und einen Förderer 22 auf. Die Presse 10 kann grundsätzlich von jeder herkömmlichen Bauart mit einem festen oder variablen Pressraum sein und sowohl in der Landwirtschaft als auch im industriellen Betrieb eingesetzt werden. Vorzugsweise ist die Presse 10 von der Bauart gemäß der deutschen Patentanmeldung 101 53 540.6, deren Offenbarung hiermit einbezogen wird.

Der Rahmen 12 wird von einem Schweiß- und/oder Schraubzusammenbau gebildet, der nach vorne in einer Deichsel 24 ausläuft, unten mit dem Fahrgestell 14 verbunden ist und rückwärtig einen oberen Ausleger 26 der Weiterbearbeitungsvorrichtung 120 bzw. des Wickelgeräts 100 aufweist. Zwischen jeweils nicht näher bezeichneten seitlichen Wangen des Rahmens 12 sind Seitenwände 30 vorgesehen, zwischen denen der Pressraum 18 aufgenommen ist.

Der Ausleger 26 kann mittels einer angedeuteten Flanschverbindung lösbar an den Rahmen 12 angeschlossen werden.

Das Fahrgestell 14 kann in Tandemachsbauweise mit zwei Achsen 32 ausgebildet sein, wie dies dargestellt ist, oder auch nur eine einzige gefederte oder ungefederte Achse 32 aufweisen, die an jeder Seite ein Rad trägt. Das Fahrgestell 14 befindet sich unterhalb des Pressraums 18 und etwas hinter diesem.

Die Presselemente 16 sind in dem dargestellten Ausführungsbeispiel als endlose flexible Zugmittel wie bspw. als Riemen, Bänder, Stabketten etc. ausgebildet. Die Presselemente 16 werden über Rollen 34 geführt und umgeben umfangsseitig im Wesentlichen den Pressraum 18. Die Rollen 34 sind teilweise starr und teilweise beweglich gelagert. Die Verwendung beweglich angebrachter Rollen 34 führt zu einem Pressraum 18 variabler Größe. Die beweglichen Rollen 34 werden auf nicht dargestellte Weise von schwenkbaren Armen aufgenommen und je nach Betriebszustand verstellt. Im vorderen und der Zuführvorrichtung 20 zugelegenen Bereich des Pressraums 18 bilden die Presselemente 16 einen Einlass 36, durch den Pressgut in den Pressraum 18 gefördert werden kann. Im rückwärtigen unteren Bereich des Pressraums 18 wird ein Auslass 38 gebildet, wenn die entsprechenden Rollen 34 mit den Presselementen 16 angehoben werden und dabei den Pressraum 18 öffnen.

Der Pressraum 18 ist in seiner Größe veränderbar ausgebildet, weil die Presselemente 16 nachgiebig sind. Stattdessen könnte auch ein Pressraum 18 gebildet werden, dessen Größe unveränderlich ist und der bspw. von ortsunveränderlichen Rollen oder Bändern umgeben ist. Der Pressraum 18 ist so ausgerichtet, dass ein sich in ihm befindlicher Ballen 40 um eine horizontal und quer zur Fahrtrichtung verlaufende mittige gedachte Zylinderachse dreht; bei einer Quaderballenpresse wäre der Pressraum 18 starr ausgebildet.

Die Zuführvorrichtung 20 enthält im beschriebenen Ausführungsbeispiel einen Aufnehmer 42 in der Form einer sogenannten Pick-Up und eine daran anschließende und gegebenenfalls als Schneidvorrichtung ausgebildete Fördervorrichtung 44, die aufeinander folgend auf dem Boden liegendes Pressgut erfassen und durch den Einlass 36 in den Pressraum 18 fördern, wo es zu einem Ballen geformt wird.

Der Förderer 22 weist einen dachartig geformten Rahmen 46 auf, der mit dem Rahmen 12 der Presse 10 fest verbunden ist. Weiterhin umfasst der Förderer 22 einen Fördertisch 48, eine erste Führung 50, eine erste Betätigungsvorrichtung 52, eine zweite Betätigungsvorrichtung 54 und eine dritte Betätigungsvorrichtung 74. Die Aufgabe des Förderers 22 besteht im Wesentlichen darin, einen aus dem Pressraum 18 abgegebenen Ballen aufzunehmen und entweder zu der Weiterbearbeitungsvorrichtung 120 zu fördern oder auf dem Boden abzulegen.

Der Rahmen 46 enthält die erste Führung 50, in der ein Schlitten 56 mit Rollen 58 geführt werden kann. Oberhalb des Rahmens 46 ist ein Schwenkgelenk 76 angeordnet, um das ein Schwenkrahmen 62 zwischen einer waagrechten Stellung zur Aufnahme eines im Wickelgerät 100 verarbeiteten Ballens 40 sowie zu dessen Ablage und einer nach oben geschwenkten Stellung bewegt werden kann. Der Schwenkrahmen 62 weist eine zweite Führung 72 auf, in der der Schlitten 56 in paralleler Richtung zum Schwenkrahmen 62 entlang gleiten kann. In der in Figur 1 gezeigten Darstellung befindet sich der Schlitten 56 in einer hinteren Stellung am einem rückseitigen Ende des Schwenkrahmens 62, bei der ein darauf liegender Ballen 40 mittels des Wickelgeräts 100 mit einer Umhüllung versehen werden kann.

Der Schlitten 56 kann mit seinen Rollen 58 in der ersten Führung 50 des Rahmens 46 aufgenommen werden, wo er in einer zum Boden geneigten Richtung bewegt werden kann. Der Schlitten 56 kann mit seinen Rollen 58 auch in der zweiten Führung 72 des Schwenkrahmens 62 aufgenommen werden, wo er in zum Boden paralleler Richtung bewegt werden kann.

Der Fördertisch 48 enthält wenigstens zwei Walzen 64, die weniger als den Durchmesser eines fertig gewickelten Ballens 40 voneinander beabstandet drehbar am Schlitten 56 gelagert sind. In dem bevorzugten Ausführungsbeispiel ist über die Walzen 64 ein endloses Band 66 geschlungen, das den Abstand zwischen den Walzen 64 überbrückt und zu einem geringen Maß durchhängt. Grundsätzlich ist ein solches Band 66 nicht erforderlich, und an seiner Stelle könnten auch weitere Walzen vorgesehen sein. Auf der dem Wickelgerät 100 abgelegenen Seite des Schlittens 56 ist neben der Walze 64 eine weitere Walze 70 vorgesehen, die einen kleineren Durchmesser aufweisen kann als die übrigen Walzen 64 und so gegenüber einer Ebene durch die Drehachsen der Walzen 64 versetzt ist, dass sie zu einer Muldenform des Fördertischs 48 führt. Die Walzen 64 können frei drehbar oder angetrieben ausgebildet sein. Im gezeigten bevorzugten Ausführungsbeispiel ist eine der beiden Walzen 64 angetrieben, bspw. mittels eines Hydraulikmotors.

Die mittels des Rahmens 46 gebildete erste Führung 50 besteht im einfachsten Fall aus zwei zu der Längsmittenebene der Presse 10 parallelen U-Schienen, die an den Rahmen 12 der Presse 10 angeschraubt werden können und sich zu deren Längsmittenebene hin öffnen. Die erste Führung 50 weist einen dachartigen Verlauf auf und verläuft zunächst mit einer Neigung von bspw. circa 30 Grad zum Boden nach hinten ansteigend, bildet dann einen Knick und verläuft mit einer Neigung von circa 30 Grad zum Boden nach hinten abfallend. Die höchste Stelle der ersten Führung 50 mit dem Knick befindet sich im gezeigten Ausführungsbeispiel ungefähr oberhalb der hinteren der beiden Achsen 32 des Fahrgestells 14 und im Mündungsbereich der zweiten Führung 72.

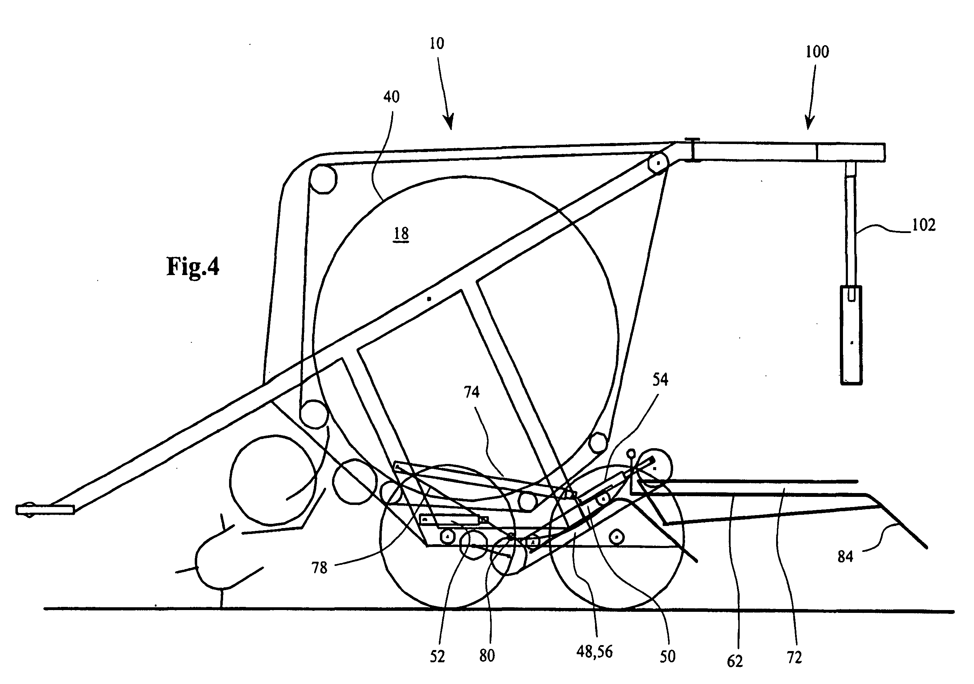

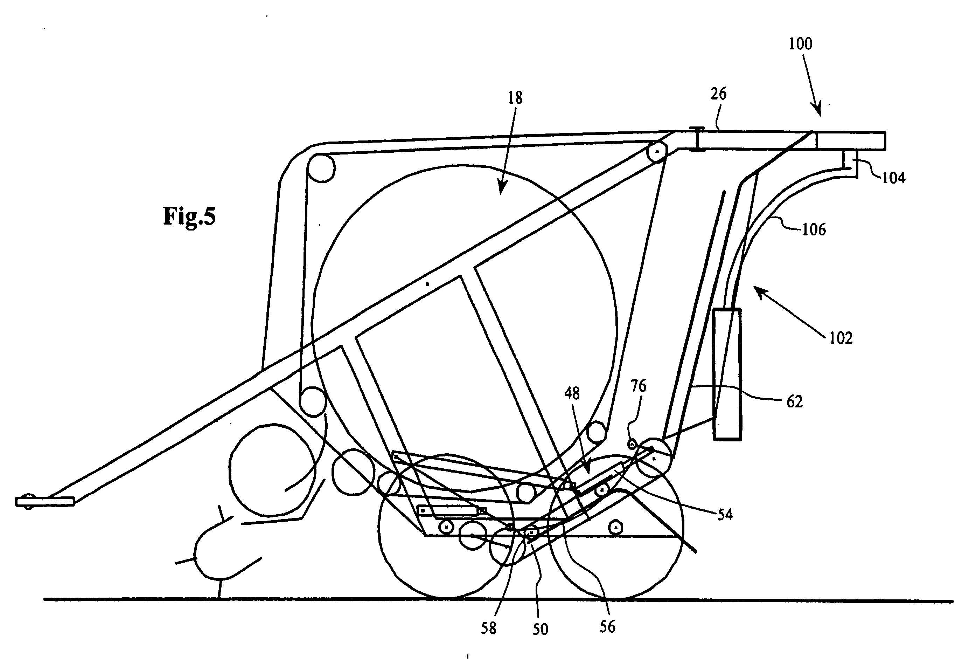

Die in, an oder auf dem Schwenkrahmen 62 gebildete zweite Führung 72 kann ebenso wie die erste Führung bspw. aus zwei parallelen U-Schienen bestehen, die sich zur Längsmittenebene der Presse 10 hin öffnen. Die zweite Führung 72 kann einen waagrechten oder einen stark geneigten mit nach hinten zum Boden hin abfallenden Verlauf aufweisen, wie dies anhand der Figuren 4 und 5 verdeutlicht ist. Bei nach oben geschwenktem Schwenkrahmen 62 befindet sich der Schlitten 56 allerdings nicht innerhalb der zweiten Führung 72, sondern wird währenddessen immer von der ersten Führung 50 geführt.

Die Presse 10 weist insgesamt drei Betätigungsvorrichtungen 52, 54 und 74 auf. Die waagrecht angeordnete erste Betätigungsvorrichtung 52 ist vorzugsweise als doppelt wirkender Hydraulikzylinder ausgebildet und ist mit einem Ende schwenkbar am Rahmen 12 und mit einem anderen Ende an einer Koppelstange 78 angelenkt. Die Koppelstange 78 ist mit einem Ende mittels eines Koppelgelenks 80 schwenkbar am Rahmen 12 angelenkt und trägt an ihrem anderen Ende die dritte Betätigungsvorrichtung 74. Deren gegenüber liegendes ausfahrbares Ende ist an einer Mitnehmerstange 82 angelenkt, die mit dem Schlitten 56 fest verbunden ist. Auch die dritte Betätigungsvorrichtung 74 ist vorzugsweise als doppelt wirkender Hydraulikzylinder ausgebildet. Die zweite Betätigungsvorrichtung 54 ist vorzugsweise als einfach wirkender Hydraulikzylinder ausgebildet, mit einem Ende schwenkbar am Rahmen 12 gelagert und mit ihrem anderen Ende schwenkbar am Schwenkrahmen 62 angelenkt. Die Betätigungsvorrichtungen 52, 54 und 74 werden vorzugsweise mittels nicht gezeigter elektromagnetisch gesteuerter Ventile von einem Bordrechner oder manuell gesteuert.

Grundsätzlich können die drei Betätigungsvorrichtungen 52, 54 und 74 auch mechanisch, elektromotorisch oder pneumatisch oder mittels einer Kombination dieser Antriebsarten betrieben ausgebildet sein.

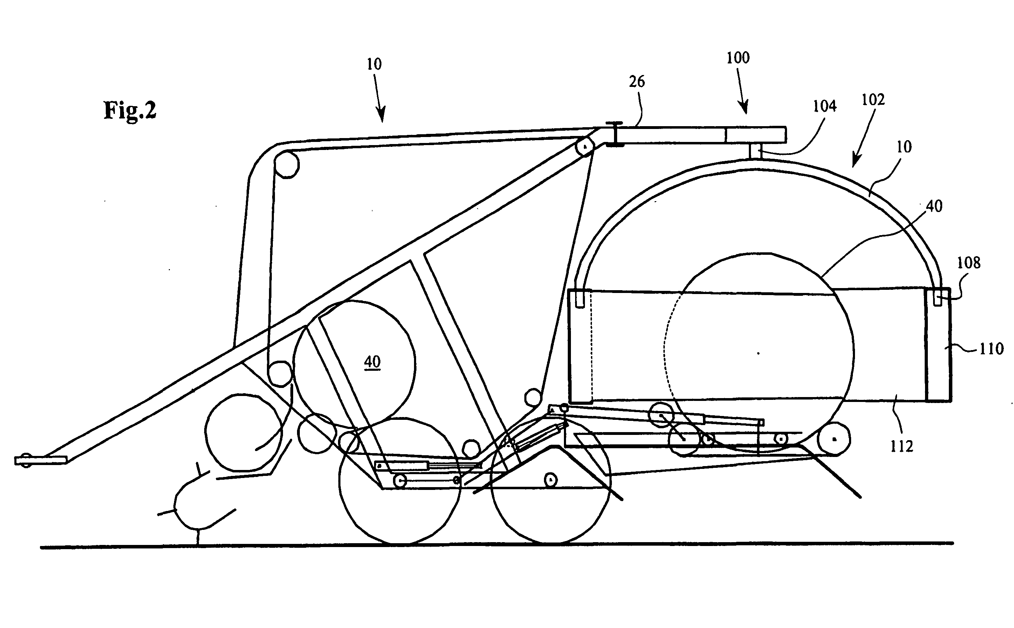

Die Figuren 1 und 2 zeigen die erste Betätigungsvorrichtung 52 im ausgefahrenen Zustand. Da die erste Betätigungsvorrichtung 52 an der Koppelstange 78 leicht oberhalb des Koppelgelenks 80 angelenkt ist, ist die Koppelstange 78 hierbei in Richtung nach hinten verschwenkt. Die am anderen Ende der Koppelstange 78 angelenkte dritte Betätigungsvorrichtung 74 befindet sich in ungefähr halb ausgefahrenem Zustand. Der über die Mitnehmerstange 82 mit der dritten Betätigungsvorrichtung 74 gekoppelte und entlang der zweiten Führung 72 verschiebbare Schlitten 56 mit dem Fördertisch 48 befindet sich in waagrechter Position in einem hinteren Bereich der zweiten Führung 72 des Schwenkrahmens 62, so dass ein auf dem Fördertisch 48 befindlicher Ballen 40 sich unmittelbar unterhalb des Wickelgeräts 100 befindet. Der einfach wirkende Hydraulikzylinder der zweiten Betätigungsvorrichtung 54 befindet sich im eingefahrenen Zustand, so dass der Schwenkrahmen 62 in waagrechter Position gegen einen mechanischen Anschlag anliegt.

Das Wickelgerät 100 umfasst einen am bis über den Fördertisch 48 in der in den Figuren 1 und 2 befindlichen Position in waagrechter Richtung nach hinten reichenden Ausleger 26 um eine vertikale Drehachse drehbar gelagerten zweigeteilten Wickelarm 102 und dient dazu, einen in der Presse 10 gebildeten Ballen 40 mit einer Folie luftdicht zu umhüllen, so dass Silagefutter gewonnen werden kann.

Der Wickelarm 102 weist einen hier nicht dargestellten Antrieb mit einer vertikalen Abtriebswelle 104 auf. Des Weiteren umfasst der zweigeteilte Wickelarm 102 einen Wickelrotor 106 in der Form eines auf dem Kopf stehenden "U", an dessen vertikalen Schenkeln 108 jeweils ein Folienspender 110 angebracht ist. Der Wickelrotor 106 ist zentrisch mit der Abtriebswelle 104 verbunden und wird mittels des Antriebs um deren Mittelachse gedreht, wobei in dem freien Innenraum zwischen den Schenkeln 108 der Ballen 40 auf dem Fördertisch 48 lagert und mit der von den Folienspendern 110 abgewickelten Folie 112 umwickelt wird (vgl. Figur 2). Wie anhand der Figur 2 deutlich erkennbar ist, muss der Ausleger 26 eine ausreichende Länge aufweisen, damit nicht der Wickelarm 102 mit dem Pressraum 18 bzw. mit den Presselementen 16 der Presse 10 kollidieren kann.

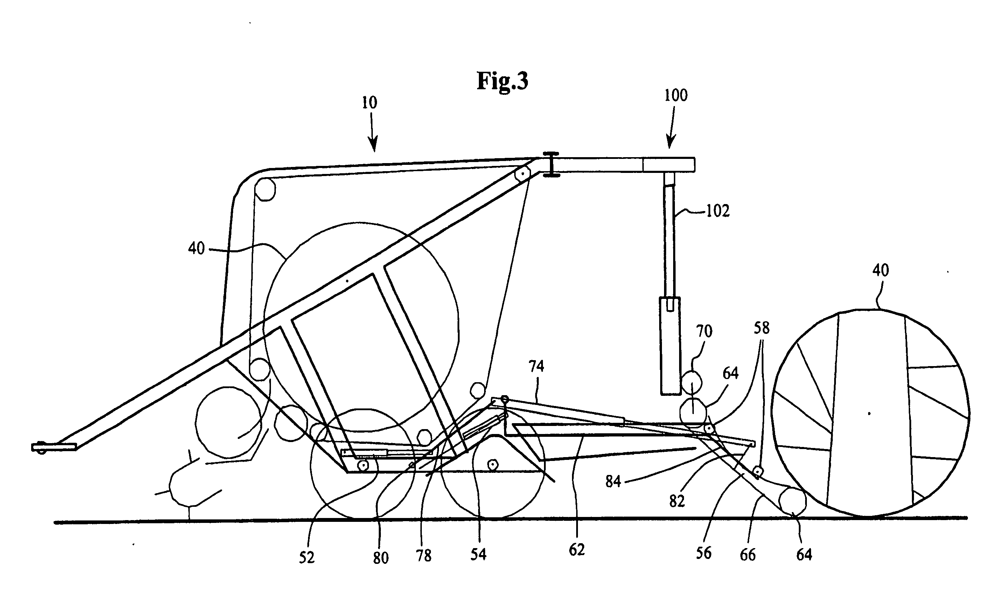

Anhand der Figuren 2 und 3 wird deutlich, dass die Presse 10 einen kontinuierlichen Betrieb ermöglicht, da ein fertig gepresster Ballen 40 auf dem Fördertisch 48 abgelegt ist, von diesem von dem Pressraum 18 wegbewegt und mittels des Wickelgeräts 100 mit Folie 112 umwickelt wird, während im Pressraum 18 bereits ein weiterer Ballen 40 geformt wird.

Figur 3 zeigt die Ablage des fertig verpackten Ballens 40 auf dem Boden hinter der sich weiter bewegenden Presse 10, was durch Verschwenken des Fördertischs 48 nach hinten unten erfolgt. Zu diesem Zweck wird die dritte Betätigungsvorrichtung 74 vollständig ausgefahren und schiebt über die Mitnehmerstange 82 den Schlitten 56 über die in den Figuren 1 und 2 gezeigte Wickelposition hinaus. Die Rollen 58 des Schlittens 56 gleiten hierbei auf oder in dem Schwenkrahmen 62, der einen schräg nach unten geneigten hinteren Rampenabschnitt 84 aufweist. Dieser Rampenabschnitt 84 knickt vom horizontalen Abschnitt der zweiten Führung 72 in dem Schwenkrahmen 62 um circa 30 Grad nach unten und ermöglicht eine Umlenkung des Schlittens 56 mit dem darauf befindlichen Fördertisch 48 um eine Neigung, die den darauf liegenden Ballen 40 nach hinten abrollen lässt. Dieses Ablegen des Ballens 40 auf dem Boden kann durch eine entsprechende Vorschubbewegung des endlosen Bandes 66 unterstützt werden.

Sobald der Ballen 40 abgelegt ist, kann der Fördertisch 48 in eine vordere Position verschoben werden, um den nächsten Ballen 40 aus dem dann zu öffnenden Pressraum 18 zu übernehmen. Diese vordere Übernahmeposition des Fördertischs 48 wird anhand der Figur 4 verdeutlicht. Die erste Betätigungsvorrichtung 52 wird zu diesem Zweck in ihre eingefahrene Stellung gebracht, wodurch die unten am Rahmen 12 angelenkte Koppelstange 78 mit der daran angelenkten dritten Betätigungsvorrichtung 74 in eine Richtung zum Pressraum 18 hin verschwenkt wird. Die dritte Betätigungsvorrichtung 74 befindet sich ebenfalls in ihrer eingefahrenen Stellung, so dass mit dieser über die Mitnehmerstange 82 der Schlitten 56 und der Fördertisch 48 aus der zweiten Führung 72 des Schwenkrahmens 62 in die erste Führung 50 des Rahmens 46 gezogen wird. Die zweite Betätigungsvorrichtung 54 bleibt hierbei vorzugsweise in der in Figur 4 dargestellten eingefahrenen Stellung, wodurch auch der damit gekoppelte Schwenkrahmen 62 in waagrechter Betriebsposition unterhalb des Wickelgeräts 100 verbleibt.

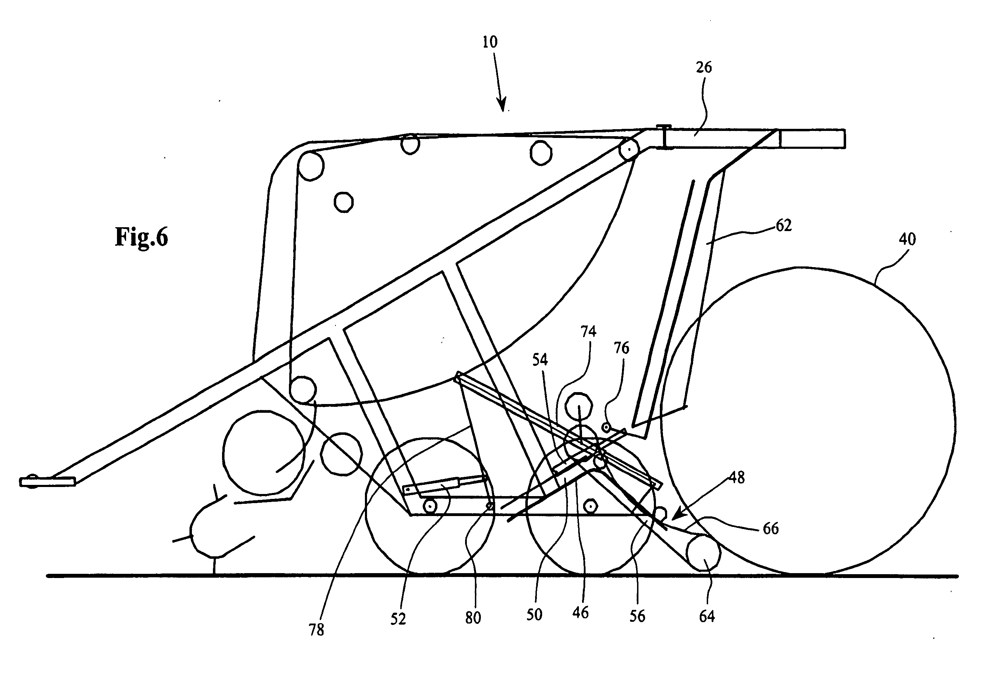

Die Figuren 5 und 6 verdeutlichen einen alternativen Betrieb der Presse 10, in der ein im Pressraum 18 gebildeter Ballen 40 nicht mittels des Wickelgeräts 100 mit Folie umwickelt, sondern unmittelbar hinter dem Pressraum 18 durch Verschwenken des Fördertischs 48 auf dem Boden abgelegt werden kann.

Dabei ist in Figur 5 ein fertig gewickelter und noch im Pressraum 18 befindlicher Ballen 40 gezeigt. Der Schlitten 56 mit dem Fördertisch 48 befindet sich in der bereits anhand der Figur 4 beschriebenen Stellung unterhalb des Pressraums 18. Die beiden Rollen 58 des Schlittens 56 befinden sich hierbei auf dem nach vorne geneigten Rampenabschnitt der ersten Führung 50.

Das Wickelgerät 100 befindet sich hierbei in einer Außerbetriebsstellung, was durch die eingeklappten und nach vorne in Richtung zum Pressraum 18 geschwenkten Wickelarme 102 verdeutlicht ist. Gleichzeitig befindet sich der Schwenkrahmen 62 und somit die zweite Führung 72 in einer nach oben geschwenkten Außerbetriebsstellung. Er ist mittels der betätigten zweiten Betätigungsvorrichtung 54 um seine Schwenkachse 76 nach oben verschwenkt und befindet sich damit ebenso wie die Wickelarme 102 des Wickelgeräts 100 innerhalb eines vom Ausleger 26 definierten äußeren Umrisses der Presse 10. Diese weist in der gezeigten Außerbetriebsstellung des Wickelgeräts 100 somit deutlich kompaktere Abmessungen auf als bei horizontal liegendem Schwenkrahmen 62 und nach außen geschwenkten Wickelarmen 102.

Die Wickelarme 102 werden vorzugsweise mittels hier nicht dargestellten Stellmotoren verschwenkt, die bspw. elektromotorisch oder hydraulisch betrieben sein können.

Figur 6 verdeutlicht die Ablagebewegung des fertig gepressten Ballens 40, der mittels des nach hinten bewegten Fördertischs 48 auf den Boden abgelegt wird. Zu diesem Zweck wird einerseits die erste Betätigungsvorrichtung 52 um einen gewissen Weg betätigt, so dass die Koppelstange 78 in Richtung zu einer ziemlich senkrechten Position verschwenkt wird. Gleichzeitig wird auch die an der Koppelstange 78 angelenkte dritte Betätigungsvorrichtung 74 um einen gewissen Weg betätigt, so dass der Schlitten 56 über den mittigen Knick der dachförmigen ersten Führung 50 in Richtung zum nach hinten abfallenden Abschnitt bewegt wird. Die rückwärtige der beiden Walzen 64 berührt dabei fast den Boden, und der Ballen 40 wird auf dem Boden abgelegt, was durch eine Rotation des endlosen Bandes 66 gegebenenfalls zusätzlich unterstützt werden kann.

Dieser in den Figuren 5 und 6 gezeigte Betrieb der Presse 10 ohne Wickelgerät 100 ist sowohl für die Straßenfahrt als auch für einen Betrieb ohne Folienumwicklung der gepressten Ballen 40 geeignet.

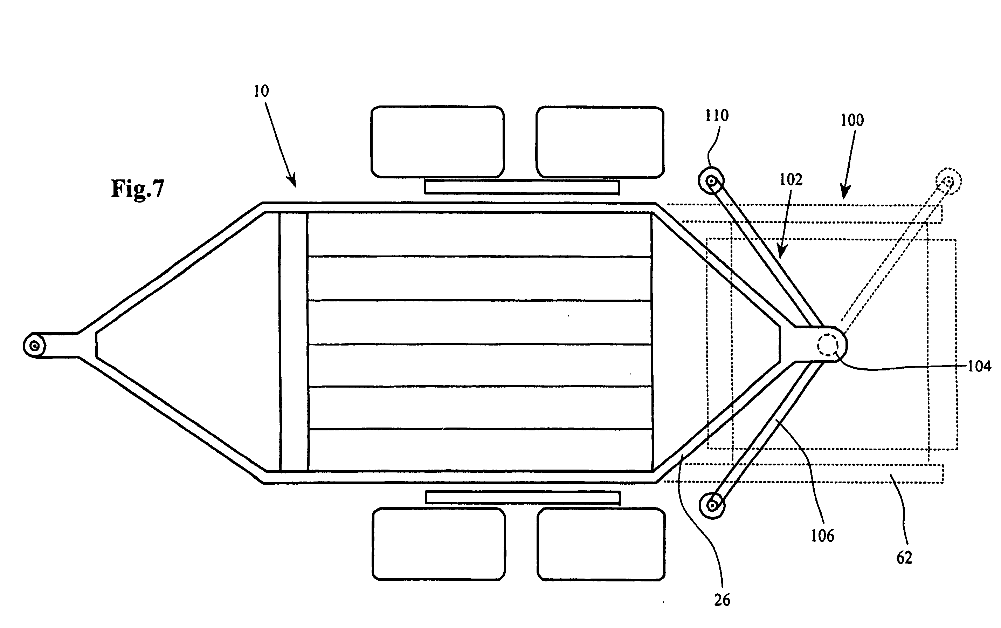

Figur 7 verdeutlicht anhand einer Draufsicht von oben die beiden möglichen Betriebsstellungen der Presse 10, wobei die Betriebsstellung des Wickelgeräts 100 durch einen mit unterbrochenen Linien dargestellten Wickelarm 102 der beiden Wickelarme 102 charakterisiert ist. Die ausgezogenen Linien verdeutlichten den ein- oder zusammengeklappten Wickelarm 102 in einer Außerbetriebsstellung. Ebenso ist der horizontal liegende Schwenkrahmen 62 mit unterbrochenen Linien angedeutet. In der Außerbetriebsstellung im eingeklappten Zustand befindet sich der Schwenkrahmen 62 innerhalb des durch den Ausleger 26 definierten rückwärtigen Umrisses der Presse 10.

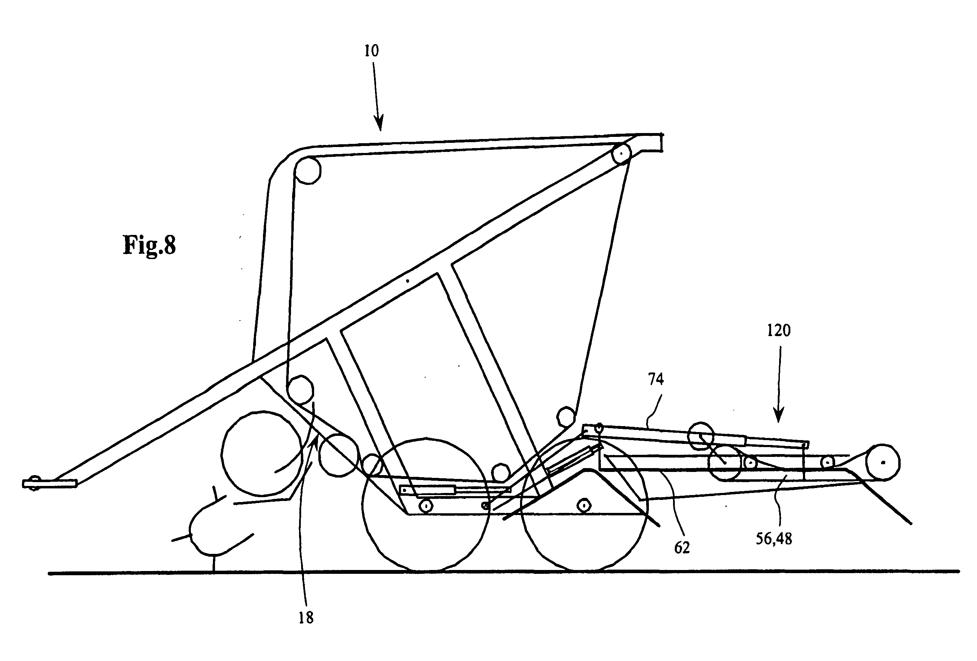

Die Figuren 8 bis 12 zeigen eine alternative bzw. allgemeinere Ausführungsform der erfindungsgemäßen Presse, die eine Weiterbearbeitungsvorrichtung 120 aufweist. Gleiche Teile wie in den Figuren 1 bis 7 sind mit gleichen Bezugsziffern bezeichnet und werden daher teilweise nicht mehrfach erläutert.

Figur 8 zeigt die Presse 10 in der alternativen Ausgestaltung in Seitenansicht und in schematischer Darstellung. Der Schwenkrahmen 62 befindet sich hierbei in waagrechter Betriebsstellung. Die Weiterbearbeitungsvorrichtung 120 kann insbesondere eine Wiegevorrichtung oder dergleichen sein, die ein Wiegen der Ballen 40 und eine Weitergabe der erfassten Daten an einen zentralen Bordrechner ermöglicht. Auf diese Weise ist eine kontinuierliche Erfassung der bereits verarbeiteten Massen möglich. Die Weiterbearbeitungsvorrichtung 120 kann jedoch ebenso das bereits beschriebene Wickelgerät 100 umfassen bzw. als solches ausgebildet sein. Im Übrigen entspricht die Darstellung der Figur 8 der bereits anhand der Figur 1 beschriebenen Betriebsstellung, da die übrigen Komponenten zur Verstellung und zum Verschwenken des Fördertischs 48 sowie des Schwenkrahmens 62 die gleichen sind.

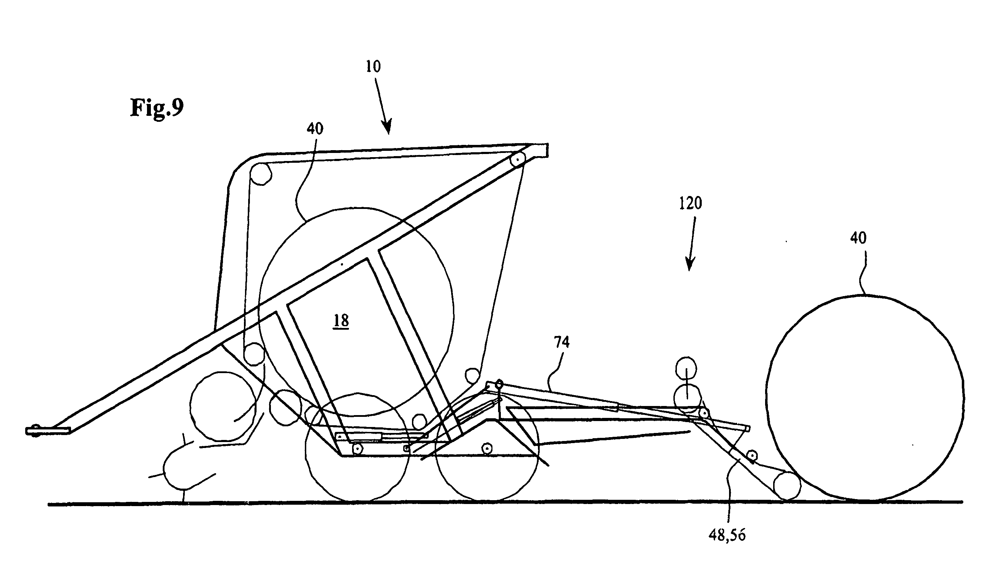

Figur 9 zeigt die Ablage eines fertig gewickelten und mit der Weiterbearbeitungsvorrichtung 120 erfassten, bspw. gewogenen Ballens 40 auf dem Boden hinter der kontinuierlich weiter fahrenden Presse 10. In deren Pressraum 18 befindet sich bereits wieder ein teilweise gewickelter Ballen 40.

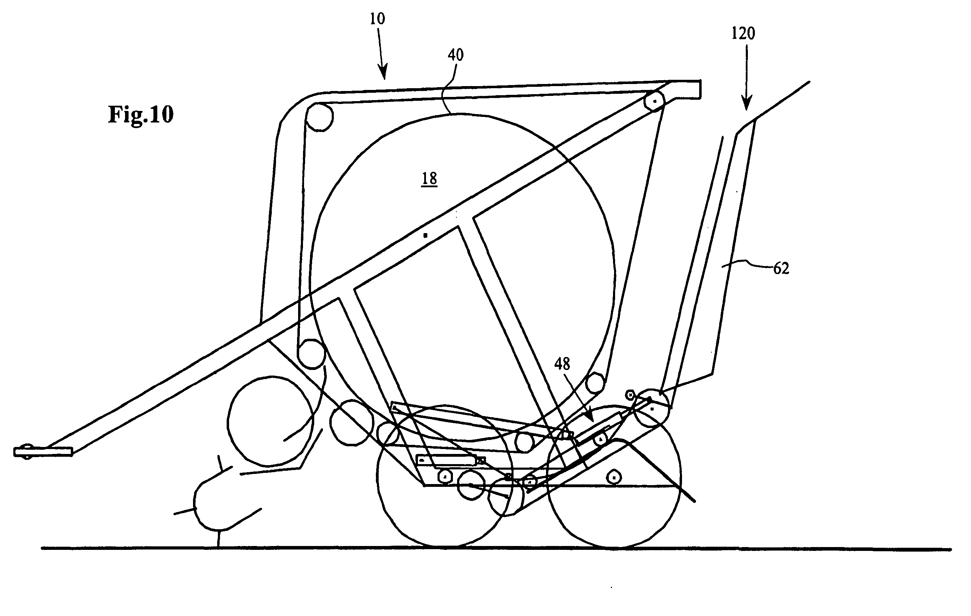

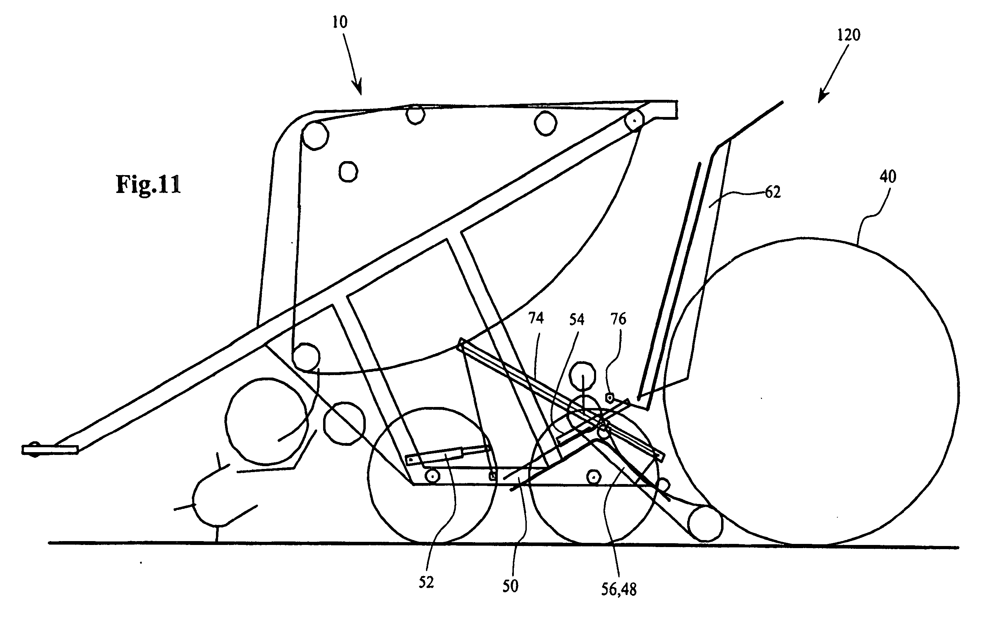

Die Figuren 10 und 11 zeigen die alternative Variante der Presse 10 ohne Nutzung der Weiterbearbeitungsvorrichtung 120, d. h. nachdem diese im Wesentlichen demontiert ist. Anschließend wird der Schwenkrahmen 62 mit Hilfe der zweiten Betätigungsvorrichtung 54 nach oben verschwenkt. Die zweite Führung 72 am Schwenkrahmen 62 ist damit außer Funktion gesetzt und der Schlitten 56 mit dem Fördertisch 48 wird nur innerhalb der ersten Führung 50 verschoben bzw. verschwenkt. Die Darstellung der Figur 10 zeigt den unterhalb des Pressraums 18 und zur Übernahme eines fertig gewickelten Ballens 40 angeordneten Fördertisch 48, der anschließend durch Betätigung der ersten und dritten Betätigungsvorrichtungen 52 und 74 nach hinten unten verschwenkt werden kann (vgl. Figur 11). Hierdurch wird ein Ballen 40 auf dem Boden abgelegt.

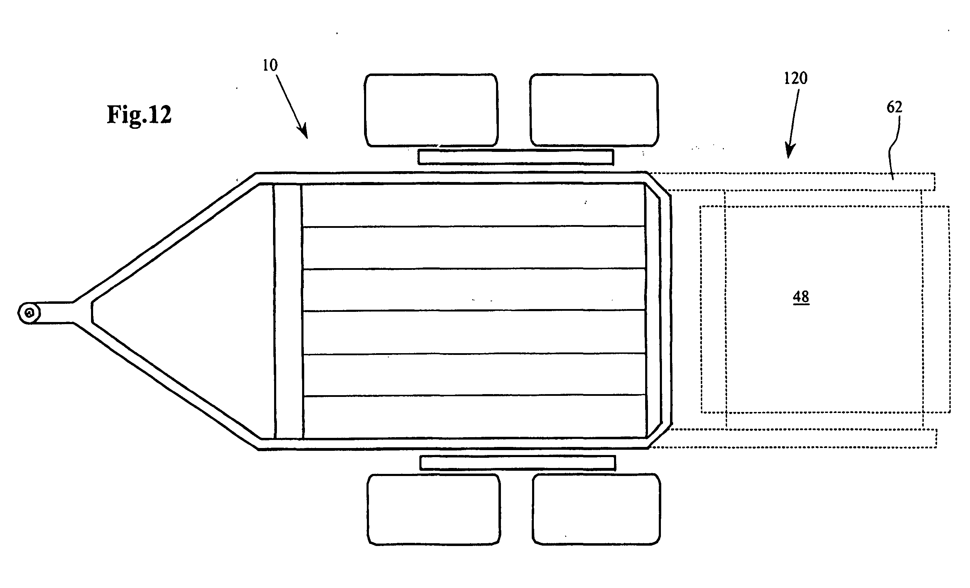

Figur 12 verdeutlicht anhand einer Draufsicht von oben die beiden möglichen Betriebsstellungen der zweiten Ausführungsform der Presse 10, wobei die Betriebsstellung der Weiterbearbeitungsvorrichtung 120 durch einen mit unterbrochenen Linien dargestellten und horizontal liegenden Schwenkrahmen 62 charakterisiert ist. Ebenso ist die dritte Betätigungsvorrichtung 74 mit unterbrochenen Linien angedeutet. In der Außerbetriebsstellung im eingeklappten Zustand befindet sich der Schwenkrahmen 62 und die dritte Betätigungsvorrichtung 74 nahe des hinteren Umrisses der Presse 10.

## Patentansprüche

1. Presse (10), insbesondere Rundballenpresse, mit einem Pressraum (18), einem Auslass (38) des Pressraums (18) und mit einer Weiterbearbeitungsvorrichtung (120), die stromabwärts des Auslasses (38) angeordnet ist und einen Fördertisch (48) aufweist, der in wenigstens einer Führung (50, 72) gegenüber dem Auslass (38) bewegbar ist, **dadurch gekennzeichnet, dass** der Führung (50) zumindest eine zweite Führung (72) zugeordnet ist, die in eine Außerbetriebsstellung an den Außenkanten der Presse bringbar ist.

2. Presse nach Anspruch 1, **dadurch gekennzeichnet, dass** die Führungen (50, 72) schwenkbar miteinander verbindbar sind.

3. Presse nach Anspruch 1 oder 2, **dadurch gekennzeichnet, dass** die Führung (50) bzw. erste Führungen (50) in einer Betriebsstellung an der Presse verbleibt(en) und den Fördertisch (48) aufnehmen.

4. Presse nach einem oder mehreren der vorherigen Ansprüche, **dadurch gekennzeichnet, dass** die zweite Führung (72) mittels Betätigungsvorrichtungen (52, 54) bewegbar ist.

5. Presse nach einem oder mehreren der vorherigen Ansprüche, **dadurch gekennzeichnet, dass** der Fördertisch (48) der Weiterbearbeitungsvorrichtung (120) eine Wiegeeinrichtung aufweiset.

6. Presse nach einem oder mehreren der vorherigen Ansprüche, **dadurch gekennzeichnet, dass** der Fördertisch (48) ein Wickeltisch einer Wickeleinrichtung (100) ist.

7. Presse nach Anspruch 6, **gekennzeichnet, durch** eine stromabwärts des Auslasses (38) angeordnete Weiterbearbeitungsvorrichtung (120) sowie wenigstens einen außerhalb eines Bewegungsbereichs einer Auslassvorrichtung des Pressraums (18) angeordneten Wickelarm (102).

8. Presse nach Anspruch 7, **dadurch gekennzeichnet, dass** die Wickelarme (102) in eine Außerbetriebsstellung an den Außenkanten der Presse (10) bringbar sind.

9. Presse nach Anspruch 7 oder 8, **dadurch gekennzeichnet, dass** der Wickelarm (102) mittels eines Stellmotors in die jeweilige Stellung bringbar ist.

10. Presse nach einem der Ansprüche 7 bis 9, **dadurch gekennzeichnet, dass** die Bewegung des Wickelarms (102) und des Fördertischs (48) zwischen der Betriebsstellung und der Außerbetriebsstellung miteinander gekoppelt sind.

11. Presse nach einem der Ansprüche 7 bis 10, **dadurch gekennzeichnet, dass** die Stellmotoren des Fördertischs (48) bzw. des Wickeltischs und/oder des Wickelarms (102) automatisch in Abhängigkeit wenigstens eines Signals einer weiteren verstellbaren Komponente der Presse angesteuert werden.

## Claims

1. Press (10), in particular roundbaler, with a press chamber (18), an outlet (38) of the press chamber (18) and with a further processing device (120), which is arranged downstream of the outlet (38) and has a conveyor table (48), which is movable relative to the outlet (38) in at least one guide (50, 72), **characterised in that** at least a second guide (72), which can be brought into a non-operative position at the outer edges of the press, is associated with the guide (50).

2. Press according to Claim 1, **characterised in that** the guides (50, 72) can be connected to one another to swivel.

3. Press according to Claim 1 or 2, **characterised in that** the guide (50) or first guides (50) remain(s) in an operative position on the press and receive(s) the conveyor table (48).

4. Press according to one or more of the preceding claims, **characterised in that** the second guide (72) is movable by means of operating devices (52, 54).

5. Press according to one or more of the preceding claims, **characterised in that** the conveyor table (48) of the further processing device (120) has a weighing means.

6. Press according to one or more of the preceding claims, **characterised in that** the conveyor table (48) is a wrapping table of a wrapping device (100).

7. Press according to Claim 6, **characterised by** a further processing device (120) arranged downstream of the outlet (38) and at least one wrapping arm (102) arranged outside a movement range of a discharge device of the pressing area (18).

8. Press according to Claim 7, **characterised in that** the wrapping arms (102) may be brought into a non-operative position at the outer edges of the press (10).

9. Press according to Claim 7 or 8, **characterised in that** the wrapping arm (102) can be brought into the respective position by means of a servomotor.

10. Press according to one of Claims 7 to 9, **characterised in that** the movement of the binding arm (102) and of the conveyor table (48) between the operative position and the non-operative position are coupled to one another.

11. Press according to one of Claims 7 to 10, **characterised in that** the servomotors of the conveyor table (48) or the wrapping table and/or the wrapping arm (102) are actuated automatically as a function of at least one signal of a further adjustable component of the press.

## Revendications

1. Presse (10), en particulier presse à balles rondes, comportant un compartiment de compactage (18), une sortie (38) du compartiment de compactage (18) et comportant un dispositif de traitement complémentaire (120), qui est agencé en aval de la sortie (38) et qui comporte une table de convoyage (48), qui est mobile par rapport à la sortie (38) dans au moins un guidage (50, 72), **caractérisée en ce que** le guidage (50) est associé à au moins un deuxième guidage (72), qui peut être amené dans une position hors service sur les bords extérieurs de la presse.

2. Presse selon la revendication 1, **caractérisée en ce que** les guidages (50, 72) peuvent être reliés l'un à l'autre de manière pivotante.

3. Presse selon la revendication 1 ou 2, **caractérisée en ce que** le guidage (50) ou des premiers guidages (50), reste (restent) dans une position de service sur la presse et reçoit (reçoivent) la table de convoyage (48).

4. Presse selon une ou plusieurs des revendications précédentes, **caractérisée en ce que** le deuxième guidage (72) est mobile au moyen de dispositifs de manoeuvre (52, 54).

5. Presse selon une ou plusieurs des revendications précédentes, **caractérisée en ce que** la table de convoyage (48) du dispositif de traitement complémentaire (120) comporte un dispositif de pesée.

6. Presse selon une ou plusieurs des revendications précédentes, **caractérisée en ce que** la table de convoyage (48) est une table d'enrubannage d'un dispositif d'enrubannage (100).

7. Presse selon la revendication 6, **caractérisée par** un dispositif de traitement complémentaire (120), agencé en aval de la sortie (38), ainsi qu'au moins un bras d'enrubannage (102) agencé en dehors d'une zone de mouvement d'un dispositif de sortie du compartiment de compactage (18).

8. Presse selon la revendication 7, **caractérisée en ce que** les bras d'enrubannage (102) peuvent être amenés dans une position hors service sur les bords extérieurs de la presse (10).

9. Presse selon la revendication 7 ou 8, **caractérisée en ce que** le bras d'enrubannage (102) peut être amené dans la position respective au moyen d'un servomoteur.

10. Presse selon l'une quelconque des revendications 7 à 9, **caractérisée en ce que** le mouvement du bras d'enrubannage (102) et le mouvement de la table de convoyage (48) sont couplés l'un à l'autre entre la position de service et la position hors service.

11. Presse selon l'une quelconque des revendications 7 à 10, **caractérisée en ce que** les servomoteurs de la table de convoyage (48) ou de la table d'enrubannage et/ou du bras d'enrubannage (102) sont activés automatiquement en fonction d'au moins un signal d'un autre composant réglable de la presse.
